# EUROPÄISCHE PATENTANMELDUNG

(11) **EP 2 026 346 A1**
(43) Veröffentlichungstag der Anmeldung: **18.02.2009**
(21) Anmeldenummer: 06799635.5
(22) Anmeldetag: 30.05.2006
(51) Int. Cl.: G11B 7/24, G11B 7/0037

(54) **SCHEIBENFÖRMIGER INFORMATIONSTRÄGER**

(71) Anmelder: TROPILLO, Andrei Vladimirovich, St. Petersburg 196128 (RU)
(72) Erfinder: MASOL, Igor Vitalievich, Kiev, 01021 (UA); TROPILLO, Andrey Vladimirovich, S. Petersburg, 196128 (RU)
(74) Vertreter: Lemcke, Brommer & Partner
(86) Internationale Anmeldenummer: PCT/RU2006/000279
(87) Internationale Veröffentlichungsnummer: WO 2007/139423

(57) **Zusammenfassung**

Die Erfindung bezieht sich auf Informationsträger in Form einer Disk zur Speicherung und Wiedergabe einer Audio- und Videoinformation sowie von anderen Informationsarten in digitaler Form. Der Informationsträger in Form einer Disk hat eine Mittenöffnung zu dessen Halterung in einer Ableseeinrichtung und ist mindestens mit einem Substrat mit einer ersten Seite S₁ und einer zweiten Seite S₂ sowie mindestens mit einer Informationsschicht zur Speicherung und/oder Aufzeichnung und/oder Ablesung einer Information durch einen Laserstrahl versehen. Dabei sind erfindungsgemäß im Zentralteil des Informationsträgers eine zwischen Durchmessern D₁ und D₂ gelegene Zone R₁ und eine zwischen Durchmessern D₂ und D₃ gelegene Zone R₂ vorgesehen, wobei Dᵢ den Durchmesser einer zur Mittenöffnung des Informationsträgers konzentrischen Kreislinie bedeutet, i = 1 ... 3 ist, wobei D₁ im wesentlichen 15 mm, D₂ im wesentlichen 25 mm und D₃ im wesentlichen 33 mm betragen. Für jede Zone Rⱼ, wo j = 1 ... 2 ist, ist Hⱼ, also der größte Abstand zwischen zwei gedachten parallelen Ebenen, von denen die erste Ebene an der Seite S₁ in der Zone Rⱼ gelegene Punkte des Substrates und von denen die zweite an der Seite S₂ in einer Zone zwischen den Durchmessern D₁ und D₃ gelegene Punkte des Substrates aufweist, festgelegt, wobei Hᵢ ≤ 2,2 mm, H₂ ≤ 1,5 mm und bei H₂ < 1,0 mm der Wert H₁ ≥ 1,05 mm sind und die Substratdicke mindestens im Bereich der Informationsschicht max. 0,8 mm ausmacht. Diese Ausbildung des Informationsträgers ermöglicht eine Speicherung und/oder Aufzeichnung und/oder Neuaufzeichnung bis auf 4,7 Gigabit bei Anwendung einer modernen Anlage mit einem Laserstrahl mit 635 bis 650 nm Länge und bis auf 15 Gigabit und darüber bei Anwendung einer aussichtsreichen Anlage mit einer Laserstrahl mit 405 bis 450 nm Länge und darunter. Hierbei kennzeichnet sich der Informationsträger auch durch eine bessere Fertigungsgerechtheit und eine viel geringere Anzahl von Fehlern bei der Wiedergabe im Vergleich zu aus dem Stand der Technik bekannten Informationsträgern.

## Beschreibung

### Technisches Gebiet

Die vorliegende Erfindung betrifft Informationsträger in Form einer Disk zur Speicherung und Wiedergabe von Audio- und Videoinformationen sowie von anderen Informationsarten in Digitalform.

### Stand der Technik

Informationsträger in Form einer Disk, also digitale Mehrzweckdisks hoher Dichte, sind heute gut bekannt und weit verbreitet, wobei jeder davon mit einer Mittenöffnung im wesentlichen von 15 mm Durchmesser versehen ist und ein erstes gegossenes Substrat in Form einer Disk aus einem optisch durchsichtigen Werkstoff (vorwiegend aus einem Polykarbonat oder einem Polymethylmethakrylat), ein weiteres gegossenes Substrat in Form einer Disk aus demselben Werkstoff sowie eine Klebstofflage zur Verbindung der gegossenen Substrate miteinander und mindestens eine Informationsschicht zur Speicherung und/oder Aufzeichnung von Informationen, angeordnet zwischen der Klebstofflage und der Oberfläche mindestens eines der daran anliegenden Substrate, aufweist, wobei die Außenfläche mindestens eines der genannten Substrate glatt und durchsichtig ausgebildet ist (siehe z. B. Normen der Europäischen Assoziation für Standardisierung von Informations- und Kommunikationssystemen Nr. 267, Nr. 268 (April 2001), Nr. 272 (Juni 1999), Nr. 279 (Dezember 1998)). Je nach der Anzahl von Aufzeichnungsschichten unterscheidet man zwischen ein- und doppelseitigen digitalen Mehrzweckdisks hoher Dichte (d. h. die Ablesung und die Aufzeichnung erfolgen auf nur einer Seite oder auf beiden Seiten eines Informationsträgers).

Die erwähnten Informationsträger zur Speicherung von 4,7 Gigabit bis 18 Gigabit von Audio- und Videoinformationen sowie von anderen Informationsarten und zur Wiedergabe dieser Informationen auf modernen Anlagen mit einem optischen Ablesesystem in einem Wellenbereich von 635 bis 650 nm gelten zur Zeit als kapazitivste Speicher und/oder Aufzeichnungsmittel, sind aber mit einer Anzahl von Nachteilen behaftet, die durch deren konstruktiven Aufbau und die Besonderheiten ihrer Geometrie bedingt sind.

Jeder der bekannten Informationsträger ist insbesondere gegen Biegeverformungen äußerst empfindlich, unter deren Einwirkung Mikroverschiebungen der Substrate gegenüber einander stattfinden und somit sich Fehler wie unleserliche Abschnitte in der Informationszone ergeben. Hinzu kommt, dass die glatte durchsichtige Oberfläche gegen Beschädigungen (insbesondere Kratzer) nicht geschützt ist, was wiederum Fehler bei der späteren Wiedergabe zur Folge hat. Ein weiterer Nachteil von einseitigen digitalen Mehrzweckdisks hoher Dichte besteht in einer schlechten Haftung der Farbstoffe, welche zum Auftragen von farbenreichen Etiketten benutzt werden, an dem Werkstoff, aus dem ein zusätzliches Substrat (Polykarbonat oder Polymethylmethakrylat) besteht, sowie darin, dass durch die geometrischen Besonderheiten der Oberfläche eines einseitigen Informationsträgers die Druckformen schnell beschädigt werden, wodurch die Aussichten im wesentlichen begrenzt werden und die Druckqualität nachteilig beeinflusst wird.

Darüber hinaus wird bei der Herstellung einer digitalen Mehrzweckdisk hoher Dichte mit zwei zusammengeklebten Substraten eine größere Menge an dem Rohstoff (Polykarbonat oder Polymethylmethakrylat) verbraucht, wobei der Klebeschritt selbst bei seiner Durchführung ziemlich kompliziert und durch einen schlechten Klimafaktor gekennzeichnet ist sowie relativ viel Zeit (bis auf ein Drittel der ganzen Fertigungszeit eines Informationsträgers) in Anspruch nimmt. Hinzu kommt, dass nach dem Kleben der Substrate einer digitalen Mehrzweckdisk hoher Dichte dazwischen Luftblasen eingeschlossen bleiben, welche in der Lage sind, bei einer Änderung der Umgebung (z. B. bei einem Temperaturanstieg) eine Verschiebungsdeformation zu verursachen und somit die konstruktive Unversehrtheit zu stören, so dass die auf einer digitalen Mehrzweckdisk hoher Dichte aufgezeichnete Information teilweise verloren geht. Aus allen vorerwähnten Gründen kann der Ausschuss bei der Herstellung von digitalen Mehrzweckdisks hoher Dichte 10 % und darüber betragen.

Die nächstliegende Analogielösung für die beanspruchte Erfindung ist ein Informationsträger in Form einer Disk, also eine Compact-Disk (CD), die eine Mittenöffnung zur Fixierung des Informationsträgers in einer Ableseeinrichtung, mindestens ein Substrat mit einer ersten und einer zweiten Seite und eine Informationsschicht zur Speicherung und/oder Aufzeichnung und/oder Ablesung einer Information mittels eines Laserstrahlen aufweist (siehe z. B. Normen der Europäischen Assoziation für Standardisierung von Informations- und Kommunikationssystemen Nr. 130 (Juni 1996).

Der bekannte Informationsträger weist eine geringe Kapazität (üblicherweise von nicht mehr als 700 Mbit) auf, da bei einer Dicke dessen scheibenförmigen Substrats von 1,1 bis 1,35 mm er auf einer Anlage mit einer Wellenlänge von 780 nm wiedergegeben wird, denn die typischen Abmessungen von Informationspits und deren Teilung in einer CD sind viel größer als in einer digitalen Mehrzweckdisk hoher Dichte, während deren Anzahl jeweils im wesentlichen geringer ist. Außerdem ergeben sich infolge einer verhältnismäßig großen Substratdicke (von 1,2 mm) oftmals allgemeine Spannungen in dieser Substratdicke innerhalb der Informationszone, durch welche eine Doppelbrechung und eventuelle Fehler bei der Wiedergabe sowie ein Bruch des Informationsträgers und eine Beschädigung der Ableseeinrichtung bei einer Informationsablesegeschwindigkeit von über 24x verursacht werden. Wegen eines verhältnismäßig großen Gewichtes und einer bedeutenden Stärke einer CD besitzt diese eine relativ niedrige Beständigkeit gegen Biegedeformationen, indem sie im allgemeinen ziemlich spröde und recht empfindlich gegen Zusammenstösse deren Kante mit festen Oberflächen ist, durch welche sich an den Kanten einer CD Risse und Ausbrüche bilden können. Hinzu kommt, dass die bekannte CD genauso wie die zuvor beschriebene digitale Mehrzweckdisk hoher Dichte gegen Beschädigungen der glatten durchsichtigen Oberfläche bei der Ausrichtung des Informationsträgers mit dieser Seite nach unten und der Unterbringung selbst auf mäßig rauen Oberflächen (wie beispielsweise Tisch od. dgl.) schlecht geschützt ist, weil auf der durchsichtigen Seite des Informationsträgers nur ein ringförmiger Vorsprung mit 0,3 mm Höhe auf einem Durchmesser von 34 mm zum Stapeln von Informationsträgern vorgesehen ist. Es sei weiter ein verhältnismäßig hoher Verbrauch an dem Rohstoff bei der Herstellung von CDs erwähnt, der im Wesentlichen dem Verbrauch von Polykarbonat (Polymethylmethakrylat) bei der Fertigung von digitalen Mehrzweckdisks hoher Dichte identisch ist.

Daher wurde der Erfindung die Aufgabe zugrunde gelegt, einen neuen Informationsträger bereitzustellen, bei dem die meisten Nachteile der bekannten digitalen Mehrzweckdisks hoher Dichte und der CD-Informationsträger behoben sind und gleichzeitig die Mehrzahl deren Vorteile beibehalten wird.

### Darstellung der Erfindung

Die vorliegende Erfindung bezweckt die Schaffung eines Informationsträgers in Form einer Disk mit erhöhter Kapazität und neuen geometrischen Charakteristiken, welcher von den meisten, vorstehend beschriebenen Nachteilen der bekannten Informationsträger wie CDs und digitale Mehrzweckdisks hoher Dichte frei ist und dessen Information auf allen modernen Anlagen unter Verwendung eines Laserstrahlen mit einer Wellenlänge von 635 bis 650 nm sowie auf einer aussichtsreichen Anlage mit einer Wellenlänge von 405 bis 450 nm und darunter abgelesen und/oder aufgezeichnet und/oder neu aufgezeichnet werden kann und welcher außerdem durch eine recht mindere Anzahl von Fehlern bei der Wiedergabe dank reduzierten Spannungen in der Substratdicke in der Mittenzone und durch eine bessere Funktionstüchtigkeit einschl. eines sicheren Schutzes gegen zufällige oder absichtliche Deformationen, Ausbrüche und Risse in der Mittenzone und dem Kantenbereich, Beschädigungen der glatten durchsichtigen Oberfläche, und schließlich durch eine bessere Fertigungsgerechtheit gekennzeichnet ist.

Die genannten Ziele werden dadurch erreicht, dass bei einem Informationsträger in Form einer Disk mit einer Mittenöffnung zur Fixierung des Informationsträgers in einer Ableseeinrichtung und mit mindestens einem Substrat mit einer ersten Seite S₁ und einer zweiten Seite S₂ sowie mindestens einer Informationsschicht zur Speicherung und/oder Aufzeichnung und/oder Ablesung einer Information durch einen Laserstrahl erfindungsgemäß im mittleren Teil des Informationsträgers eine zwischen Durchmesser D₁ und D₂ gelegene Zone R₁ und eine zwischen Durchmessern D₂ und D₃ gelegene Zone R₂ festgelegt sind, wobei Dᵢ den Durchmesser einer zur Mittenöffnung konzentrischen Kreislinie bedeutet, i gleich 1 ... 3 ist, D₁ im wesentlichen 15 mm, D₂ im wesentlichen 25 mm und D₃ im wesentlichen 33 mm betragen, wobei für jede Zone Rⱼ mit i gleich 1 ... 2 Hⱼ, also der größte Abstand zwischen zwei parallelen gedachten Ebenen, von denen die eine Ebene auf der Seite S₁ in der Zone Rⱼ gelegene Punkte eines Substrates und die andere Ebene auf der Seite S₂ in der Zone zwischen den Durchmessern D₁ und D₃ gelegene Punkte des Substrates aufweist, festgelegt ist, wobei weiter H₁ ≤ 2,2 mm, H₂ ≤ 1,5 mm und bei H₂ < 1,0 mm die Größe H₁ ≥ 1,05 mm sind und die Substratdicke H₀ mindestens im Bereich der Informationsschicht max. 0,8 mm ausmacht.

Gemäß einer der besonderen Ausführungsformen der Erfindung besitzt der Informationsträger eine einzige Informationsschicht, die auf der Seite S₁ eines Substrates vorgesehen ist.

Hierbei weist der Informationsträger bevorzugterweise mindestens einen ringförmigen Vorsprung auf der Seite S₁ auf, wobei dieser Vorsprung auf der Seite S₁ vorteilhaft zwischen Durchmessern von im Wesentlichen 17 mm und 22 mm angeordnet ist.

An der Oberkante des besagten ringförmigen Vorsprunges kann eine Anzahl N von im wesentlichen gleichen, in gleichen Winkeln beabstandeten Warzen angeordnet werden, wobei N > 2 ist. Dabei ist mindestens teilweise die Seitenfläche jeder der genannten N Warzen bevorzugt kegelförmig ausgebildet, wobei der Winkel zwischen der Erzeugenden des kegelförmigen Teiles jeder Warze und der Ebene, in welcher die Oberkante dieser Warze verläuft, mehr als 90° ausmacht.

Im vorliegenden Fall ist vorteilhaft die Substratstärke zwischen Durchmessern von 15 mm und 17 mm höchstens 1,5 mm. Weiters ist H₁ bevorzugt im wesentlichen gleich 1,8 mm.

Gemäß einer anderen bevorzugten Ausführungsform der Erfindung kann ein Informationsträger eine erste, auf der Seite S₁ eines Substrates angeordnete Informationsschicht und eine zweite, auf der Seite S₂ des Substrates angeordnete Informationsschicht aufweisen.

Bei der Ausführung eines Informationsträgers sowohl mit nur einer Informationsschicht als auch mit zwei Informationsschichten ist es auch möglich, dass er N₁ Vorsprünge an der Seite S₁ enthält, wobei N₁ ≥ 1 ist und mindestens einer von diesen Vorsprüngen ein Endvorsprung sein und auf den Mittelpunkt einer Öffnung zur Halterung des Informationsträgers in einem Antrieb einer Ableseeinrichtung radial oder tangential ausgerichtet werden kann.

Darüber hinaus kann zumindest einer der erwähnten N₁ Vorsprünge endlos, d. h. geschlossen oder ringförmig (bzw. mit einer Exzentrizität bezüglich des Mittelpunktes des Informationsträgers) oder gewellt - im Grundriss gesehen - ausgebildet werden.

Es ist ferner möglich, dass der Informationsträger N₂ Vorsprünge an der Seite S₂ aufweist, wobei N₂ ≥ ist. Ähnlich wie im vorigen Fall kann mindestens einer der genannten Vorsprünge als Endvorsprung ausgeführt werden und u.a. auf den Mittelpunkt einer Öffnung zur Halterung des Informationsträgers in einem Antrieb einer Ableseeinrichtung radial oder tangential ausgerichtet sein. Es ist weiters möglich, dass zumindest einer der erwähnten N₂ Vorsprünge endlos, d. h. geschlossen oder ringförmig (bzw. mit einer Exzentrizität bezüglich des Mittelpunktes des Informationsträgers) oder gewellt - im Grundriss gesehen - ausgebildet wird.

Dabei kann der Informationsträger gleichzeitig N₁ Vorsprünge an der Seite S₁ und N₂ an der Seite S₂ aufweisen.

Falls im zentralen Bereich des Informationsträgers N₁ und/oder N₂ Vorsprünge vorhanden sind, befindet sich vorteilhaft mindestens einer der genannten Vorsprünge zumindest teilweise in der Zone R₂, wobei 1,1 ≤ H₂ ist.

Es ist weiterhin möglich, dass an der Seite S₂ auf einem Durchmesser D₄ ein ringförmiger Vorsprung mit max. 0,3 mm Höhe und max. 1,4 mm Breite ausgebildet ist, wobei es sich um 33 mm ≤ D₄ ≤ 35 mm handelt.

Es ist auch möglich, dass bei Vorhandensein nur einer Informationsschicht an der Seite S₁ nahe dem äußeren Rand des Substrates an der Seite S₂ ein ringförmiger Vorsprung mit einer Höhe h_{Eo} und einer Breite W_{EO} ausgebildet ist, wobei es sich um 0,1 mm ≤ h_{EO} ≤ 0,5 mm und W_{EO} ≤ 1 mm handelt. Im Bereich der Informationsschicht nimmt vorteilhaft die Dicke des Substrates im wesentlichen gleichmäßig zum äußeren Rand des Informationsträgers hin ab, so dass an der Seite S₁ die Oberfläche des Substrates in einem Winkel α₀ zu der Informationsableseebene angeordnet ist, wobei es sich um 0,2 ⁰ ≤ α₀ ≤ 0,4 ⁰ handelt.

Es sei angemerkt, dass der genannte Vorsprung nahe dem äußeren Rand des Substrates an der Seite S₂ auch bei dem Vorhandensein von zwei Informationsschichten (von welchen die eine Informationsschicht an der Seite S₁ und die andere an der Seite S₂ gelegen ist) ausgebildet werden kann.

Bei der Ausbildung eines Informationsträgers mit zwei Informationsschichten wird bevorzugterweise oberhalb jeder der genannten Informationsschichten eine jeweilige Schicht aus einem optisch durchsichtigen Werkstoff mit einer geringeren Stärke als die des Substrates aufgetragen.

Außerdem wird vorteilhaft die Substratstärke innerhalb der Informationszone ausgehend von der Beziehung 0,5 mm ≤ H₀ ≤ 0,65 mm ausgewählt.

Die gestellte Aufgabe wird mittels der vorstehend beschriebenen konstruktiven Ausführung eines Informationsträgers in Form einer Disk wie folgt bewältigt.

Infolge dessen, dass die Mehrzahl von Nachteilen einer digitalen Mehrzweckdisk hoher Dichte durch den Schritt Zusammenkleben von zwei Substraten bei deren Herstellung bedingt ist, ist es sinnvoll, auf diesen Verfahrensschritt zu verzichten und einen Informationsträger identisch zu einer CD-Platte bei Anwendung nur noch eines Substrates auszubilden. Um dennoch einen solchen Informationsträger auf einer modernen Anlage unter Einsatz eines Laserstrahlen mit 630 bis 650 nm Wellenlänge ablesen zu können, macht es sich erforderlich, die Substratstärke zumindest im Bereich der Informationsschicht zu vermindern, d. h. dass der Informationsträger dünner als eine digitale Mehrzweckdisk hoher Dichte und eine CD sein soll. Dank einer Abnahme der Substratstärke in der Informationszone von den genormten 1,1 bis 1,2 mm auf 0,8 mm und darunter bietet sich die Möglichkeit für die Reduzierung der typischen Abmessungen von Pits und deren Teilung in der Informationszone im Vergleich zu CDs, so dass die Dichte einer auf der Disk aufgezeichneten Information erhöht und diese Information durch einen Laserstrahl mit 635 bis 650 nm Wellenlänge abgelesen werden kann, was schließlich eine pauschale Kapazität des Informationsträgers von 4,7 Gbit zu erreichen gestattet. Hinzu kommt, dass eine Abnahme der Substratstärke zumindest in dem besagten Bereich den Verbrauch an dem Rohstoff (Polykarbonat bzw. Polymethylmethakrylat) bei der Herstellung eines Informationsträgers und dessen Masse zu verringern erlaubt, was seinerseits zu einer Abnahme von Spannungen in der Substratdicke und zu einer Senkung von Fehlern bei der Ablesung und/oder Aufzeichnung einer Information sowie zu einer besseren Flexibilität und somit einer minderen Zerbrechlichkeit des Informationsträgers beiträgt.

Es ist dabei auch vonnöten, dass der neue Informationsträger in Antrieben sämtlicher oder nahezu sämtlicher moderner Ableseeinrichtungen befestigt werden kann. Jedoch ist die Gestaltung einer Andrückzone (clamping zone) in dem neuen Informationsträger mit einer geringeren Stärke in ähnlicher Weise, wie dies bei einer CD oder einer digitalen Mehrzweckdisk hoher Dichte der Fall ist, mit ernsthaften Problemen verbunden und bei einer Serienfertigung unmöglich.

Es kommt darauf an, dass sich die für eine CD und eine digitale Mehrzweckdisk hoher Dichte vorgesehene Andrückzone zwischen zwei gedachten Kreislinien befindet, die zur Mittenöffnung konzentrisch sind und deren Durchmesser jeweils 22 mm (manchmal 25 mm) und 33 mm betragen. Die für eine CD und eine digitale Mehrzweckdisk hoher Dichte genormte Substratstärke (genauer gesagt die Stärke beider geklebten Substrate einer digitalen Mehrzweckdisk hoher Dichte) im Bereich zwischen diesen Durchmessern soll zwischen 1,1 mm und 1,4 mm betragen, wobei sich die aus diesem Bereich ausgewählte Dicke auf die gesamte Andrückzone zu erstrecken hat.

Wenn die Andrückzone in ähnlicher Weise im Informationsträger eingerichtet ist, dessen Substratstärke zumindest in der Informationszone (Zone, in welcher eine Informationsschicht vorgesehen ist) weniger als 0,8 mm ausmacht, entstehen auf Grund einer beachtlichen Dickendifferenz (im Durchschnitt von 0,4 mm und darüber) und einer damit verbundenen Zeitdifferenz der Erstarrung (Verglasung) des Substrates bei dessen Herstellung nahe der Grenze der Andrückzonen und der Informationszone Abschnitte mit hohen Innenspannungen (in der Substratdicke), wodurch erstens eine starke Doppelbrechung in diesen Abschnitten und im Anfang der Informationszone stattfindet und zweitens die Festigkeit des Informationsträgers in den genannten Abschnitten bedeutend abnimmt. Als Folge hiervon steigt die Anzahl von Fehlern beim Ablesen einer auf den Informationsträger aufgezeichneten Information schroff an und erhöht sich die Wahrscheinlichkeit einer Situation, bei der das Ablesen der Information auf dem Informationsträger (wegen der im Anfang der Informationszone vorhandenen Fehler) generell unmöglich ist, wobei sich weiters bei der Rotation des Informationsträgers im Antrieb während der Ablesung (insbesondere bei hohen Geschwindigkeiten) eine große Wahrscheinlichkeit eines Bruches des Informationsträgers in den Abschnitten mit hohen Innenspannungen ergibt, was seinerseits beträchtliche Beschädigungen der Ableseeinrichtung (vor allem des optischen Systems) zur Folge hat.

Die vorgeschlagene Ausgestaltung des Zentralteiles des Informationsträgers gestattet es, die vorerwähnten Probleme zu lösen und seinen Andruck in zur Zeit bestehenden Antrieben der Ableseeinrichtungen zu sichern, indem hierbei die zuvor beschriebenen Schwierigkeiten, verbunden mit dem Entstehen von Innenspannungen im Substrat infolge einer Dickendifferenz nahe der Grenze der Andrückzone und der Informationszone, überwunden werden.

Es sei nunmehr angemerkt, dass eine solche Ausführung des Zentralteiles des Informationsträgers nicht bekannt und keine offensichtliche Folge aus dem Stand der Technik ist, welchem entsprechend, wie bereits vorstehend dargelegt, bekannte Informationsträger (digitale Mehrzweckdisks hoher Dichte und CDs) ohne größere Vorsprünge im Zentralteil hergestellt wurden und im wesentlichen eine gleiche Stärke von ca. 1,2 mm in der Andrückzone aufwiesen. Hierbei erfolgte die Halterung der bekannten Informationsträger in Antrieben mit Mulden, die mit keinen eigenen Feststellern versehen waren, durch deren Klemmung auf Durchmessern von 22 bis 33 mm (bzw. 25 bis 32 mm) mittels einer Druckbuchse im Innern des Antriebes, während in Antrieben mit Mulden, die mit einer darauf sitzenden Spindel mit Befestigungsmitteln (dies sind vorwiegend drei kugelähnliche, in Abständen von 120° angeordnete Feststeller) versehen waren, diese Halterung durch die Klemmung mittels der genannten Befestigungsmittel in der Nähe von der Mittenöffnung des Informationsträgers erreicht wurde.

Bei der vorliegenden Erfindung ist es vorgesehen, dass die größtmögliche Höhe des Informationsträgers in der Zone, die in einer genormten Disk (einer CD oder einer digitalen Mehrzweckdisk hoher Dichte) zwischen der Andrückzone und dem Rand der Mittenöffnung gelegen ist, insbesondere dann, wenn die maximale Höhe im Bereich der genormten Andrückzone unter 1,0 mm beträgt, einen Wert bis 2,2 mm erreichen kann, so dass in dieser Zone ein sicherer Andruck des Informationsträgers praktisch bei jeder zur Zeit bekannten Ableseeinrichtung sichergestellt werden kann. Gemäß einer der bevorzugtesten Ausführungsformen der Erfindung wird bei einem Informationsträger mit nur einer Informationsschicht zwischen Durchmessern von 17 mm und 22 mm ein ringförmiger Vorsprung an der Substratseite, an welcher diese Informationsschicht angeordnet ist, vorgesehen, wobei in diesem Fall die maximale Höhe des Informationsträgers im Bereich des Vorsprunges nicht mehr als 1,8 mm betragen kann. Die Erfinder haben überraschend festgestellt, dass sich die angegebenen geometrischen Parameter des Zentralteiles des Informationsträgers praktisch günstig auf eine gleichzeitige Erfüllung zweier Voraussetzungen auswirken, und zwar eine Klemmung eines Informationsträgers in Antrieben von Ableseeinrichtungen und eine Reduzierung von Innenspannungen in der Substratdicke. Bei einer maximalen Höhe eines Informationsträgers von 2,2 mm in der Zone zwischen Durchmessern von 15 mm und 25 mm ist es möglich, seine Klemmung praktisch bei allen bekannten Antrieben und einen geeigneten Wert der Doppelbrechung im Anfang der Informationszone zu erreichen, wobei sich jedoch die Wahrscheinlichkeit eines Anstieges von Innenspannungen an der Grenze an dem in dieser Weise hergestellten Vorsprung im Vergleich zu der erwähnten bevorzugtesten Ausführungsform beachtlich erhöht. Andererseits nimmt die Größe der Innenspannungen im Substrat bei allmählicher Verminderung der maximalen Höhe in der Zone R₁ von 1,8 mm auf 1,05 mm offensichtlich ab, wobei jedoch die Sicherheit der Klemmung des Informationsträgers im Antrieb jetzt immer mehr von einem konkreten Modell der Ableseeinrichtung abhängig ist. Bei einer maximalen Höhe von etwa 1,05 mm in der Zone R₁ kann eine zuverlässige Klemmung nur bei 30 % von bekannten Antrieben erreicht werden, wobei bei weiterer Abnahme der Höhe in der Zone R₁ (bis unter 1,05 mm) eine sichere Klemmung nicht mehr gewährleistet werden kann, so dass eine solche Ausführungsform der Erfindung nicht als bevorzugt angesehen wird.

Im Rahmen der vorliegenden Erfindung wird es auch als möglich vermutet, einen Informationsträger in einem Antrieb mit Hilfe seiner Klemme in der Zone R₂, die außerhalb eines Durchmessers von 25 mm gelegen ist, zu befestigen. Im vorliegenden Fall soll die maximale Höhe innerhalb der Zone R₂ zwischen 1,1 mm und 1,5 mm liegen (d. h. aus diesem Bereich ausgewählt werden), wobei in diesem Fall die maximale Höhe in der Zone R₁ eigentlich beliebig sein kann.

Um Innenspannungen im Substrat zu vermindern und die Entstehung von Abschnitten mit einer Doppelbrechung in der Mittenzone zu verhüten, die an den Anfang der Informationszone anstoßen, wird vorgeschlagen, statt einer massiven Verdickung in der genormten Andrückzone eine Gruppe von Vorsprüngen (zumindest einen Vorsprung) oberhalb der Seite S₁ und/oder der S₂ auszubilden, die (mindestens einer der Vorsprünge) wenigstens teilweise in die Zone R₂ eingreifen, indem sie auf diese Art und Weise eine Einklemmung des Informationsträgers in einem genormten Antrieb sicherstellen, der über keine eigenen Fixierungsmittel verfügt (wie das z. B. bei Prozessoren von Tisch-PCs, Haushalts-Audio- und -Videoplayern od. dgl. der Fall ist, die im allgemeinen mit einer innerhalb des Antriebes angeordneten Aufnahmemulde und Druckbuchse versehen sind). Die erwähnten Vorsprünge können - im Grundriss gesehen - verschiedene Formen aufweisen, nämlich eine geschlossene Ringform, eine elliptische, eine gewellte Form sowie eine Endform wie eine radiale, tangentiale, bogenförmige (eine konkave oder konvexe Form in Bezug auf den Mittelpunkt des Informationsträgers) und eine beliebige krummlinige Form od. dgl., wobei die Auswahl einer konkreten Form des Vorsprunges vorwiegend von konstruktiven Besonderheiten einer für die Herstellung eines Informationsträgers benutzten Gießform und dem Grad der Kompliziertheit deren Modifikation zur Ausführung einer nicht standardisierten Abwanderung des Zentralteiles des Informationsträgers abhängt. Es ist dabei darauf zu achten, dass bei der Ausgestaltung von Vorsprüngen beliebiger Form deren vom Mittelpunkt des Informationsträgers am meisten beabstandete Punkte vorteilhaft möglichst nahe dem innerhalb der Durchmessern von 25 mm bis 27 mm gelegenen Abschnitt der Zone R₂ (und jeweils entfernt von der längs einem Durchmesser von 33 mm verlaufenden Außengrenze der Zone R₂) anzuordnen und zudem diese Vorsprünge bevorzugterweise nicht zu massiv (mit einer Dicke von max. 2 bis 3 mm und einer Höhe von max. 0,25 bis 0,3 mm) auszuführen. Dadurch wird ein Anstieg von Spannungen in der Substratdicke und eine damit verbundene Doppelbrechung im Anfang der Informationszone vermieden. Im Prinzip bietet sich auch die Herstellung von massiveren Vorsprüngen und deren Anordnung sowohl in der gesamten Zone R₂ wie auch nahezu in der gesamten Zone R₁, d. h. von dem Durchmesser 16 bis 17 mm weg bis an den Durchmesser 33 mm, an, indem dabei mit einem Wachsen von Spannungen in der Substratdicke zu rechnen ist.

Des weiteren gestattet die Herstellung eines oder zweier ringförmigen Schutzvorsprünge an der Seite S₂ des Informationsträgers, von denen der eine Schutzvorsprung 0,30 mm hoch und max. 1,4 mm breit und zwischen den Durchmessern 33 mm und 35 mm gelegen ist und von denen der andere eine aus dem Bereich 0,1 bis 0,5 mm ausgewählte Höhe und eine Breite von max. 1 mm aufweisen kann und nahe der Aussenkante des Informationsträgers gelegen ist, die Betriebseigenschaften des Informationsträgers zu verbessern, insbesondere dessen durchsichtige Seite S₂ (bei Vorhandensein von nur einer Informationsschicht) vor zufälligen Kratzern und anderen Beschädigungen bei dessen Unterbringung mit der nach unten weisenden durchsichtigen Seite auf einer rauen Oberfläche (wie z. B. einer Schreibtischplatte od. dgl.) zu schützen.

Darüber hinaus erlaubt der ringförmige Schutzvorsprung an der äußeren Kante des Informationsträgers dieser Kante eine gewünschte Steife zu verleihen, indem dadurch Ausbrüchen und Rissen durch einen zufälligen Zusammenstoss der Kante der Disk mit einer festen Oberfläche (beispielsweise beim Fallen auf den Fußboden) oder bei Entstehen von Biegeverformungen der gesamten Disk begegnet wird.

Es sei dabei betont, dass anstatt der massiven ringförmigen Vorsprünge an der glatten Oberfläche des Substrates an Kreislinien mit praktisch denselben Durchmessern gleichmäßig verteilte punktförmige Vorsprünge vorgesehen werden können, deren Breite und Höhe denen der vorerwähnten ringförmigen Vorsprünge identisch sind, so dass dadurch Spannungen im Substrat im Gegensatz zur Ausführungsform mit dem massiven Vorsprung (oder Vorsprüngen) abgebaut werden können.

Des weiteren ist die Ausbildung des Substrates in der Informationszone mit einer zur Aussenkante des Informationsträgers hin abnehmenden Dicke bei der Herstellung eines Vorsprunges an dieser Kante an der Seite S₂ dadurch bedingt, dass sich bei manchen Ablesesystemen die Linse von der Oberfläche der Disk in einem Abstand befindet, der mit der maximalen Höhe des genannten Vorsprunges an der Kante (also von ca. 0,5 mm) vergleichbar ist.

Bei Vorhandensein des besagten Vorsprunges an der Aussenkante bei einer gleichen Dicke des Informationsträgers über die gesamte Informationszone soll folglich die Aufzeichnungszone nahe der Aussenkante vermindert werden, um beim Ablesen einer Information die Wahrscheinlichkeit einer Beschädigung der Linse durch eine Berührung mit dem genannten, längs der Kante verlaufenden Vorsprung auszuschließen. Eine solche Lösung des Problems vermag eine merkliche Abnahme der Kapazität eines Informationsträgers nach sich zu ziehen.

Mit Blick auf das oben Dargelegte wird es vorgeschlagen, die Dicke des Informationsträgers in der Informationszone von deren Anfang bis hin zum Ende zügig zu verringern, wobei in dieser Zone die Oberfläche des Informationsträgers an der Seite S₂, über welche das Ablesen (und/oder das Aufzeichnen) der Informationsschicht stattfindet, glatt ausgebildet werden soll, indem die Seite S₁ abgewinkelt wird (mit einer Schräge zum Rand der Disk hin ausgeführt wird). Die ausgewählten Grenzwerte des Winkels (von 0,2° bis 0,4°) ermöglichen ein normales Ablesen einer Information, wobei sich infolge einer allmählichen Abnahme der Dicke des Informationsträgers, hervorgerufen durch die Annäherung der Informationsschicht an die Linse einer Ableseeinrichtung, und einer dadurch bedingten Notwendigkeit einer selbsttätigen Neufokussierung des optischen Systems die Linse langsam von der Oberfläche des Informationsträgers zur Seite S₂ hin entfernt und nach Einnehmen einer Stellung nahe der Kante des Informationsträgers den Vorsprung selbst bei der maximalen Höhe (0,5 mm) nicht mehr berührt.

### Kurze Beschreibung der Zeichnungen

Die vorstehend beschriebenen und anderen Aspekte der Erfindung sowie die damit verbundenen Vorteile werden im Folgenden unter Bezugnahme auf die beigefügten Zeichnungen näher erläutert. Es zeigen:
- Fig. 1: einen Informationsträger in Form einer Disk gemäß einer ersten bevorzugten Ausführungsform der Erfindung, eine Hälfte eines axialen Querschnittes;
- Fig. 2: dasselbe wie in Fig. 1, eine Draufsicht;
- Fig. 3: einen Informationsträger in Form einer Disk gemäß einer zweiten bevorzugten Ausführungsform der Erfindung, eine Hälfte eines axialen Querschnittes;
- Fig. 4: dasselbe wie in Fig. 3, eine Draufsicht;
- Fig. 5: einen Informationsträger in Form einer Disk gemäß einer dritten bevorzugten Ausführungsform der Erfindung, eine Draufsicht;
- Fig. 6: einen Informationsträger in Form einer Disk gemäß einer vierten bevorzugten Ausführungsform der Erfindung, eine Draufsicht;
- Fig. 7: einen Informationsträger in Form einer Disk gemäß einer fünften bevorzugten Ausführungsform der Erfindung, eine Draufsicht.

### Bevorzugte Ausführungsformen der Erfindung

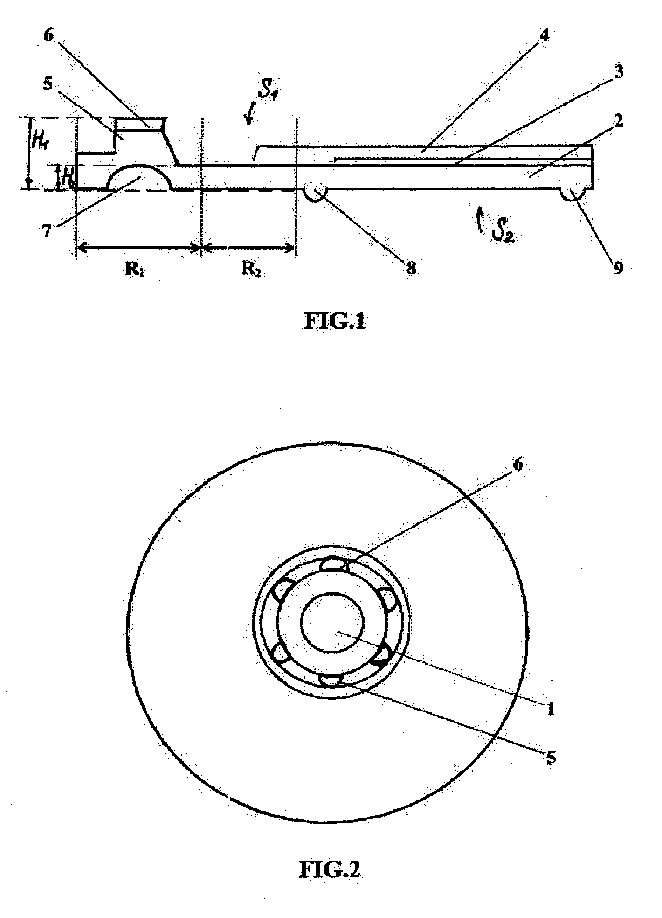

Gemäßeiner ersten bevorzugten, in den Figuren 1 und 2 dargestellten Ausführungsform der Erfindung weist ein erfindungsgemäßer Informationsträger in Form einer Disk eine Mittenöffnung 1 vorteilhaft mit einem genormten Durchmesser im wesentlichen von 15 mm zur Halterung des Informationsträgers in einem genormten Antrieb einer Ablese-/Aufzeichnungseinrichtung auf. In allen Fällen der Ausführung der Erfindung besitzt der Informationsträger ein scheibenförmiges gegossenes Substrat 2 aus einem optisch durchsichtigen Werkstoff, bevorzugt aus optischem Polykarbonat oder Polymethylmethakrylat. Auf der oberen Seite S₁ des Informationsträgers ist in einer Informationszone, welche normalerweise mit einem Durchmesser von 46 mm anfängt, eine Informationsschicht 3 zur Speicherung und/oder Aufzeichnung von Informationen vorgesehen. Im Falle einer vorherigen Aufzeichnung auf einen Informationsträger enthält die Informationsschicht im allgemeinen eine auf der zur Seite S₁ weisenden Oberfläche des Substrates befindliche Gruppe von Informationspits und mindestens eine oberhalb der Gruppe der Pits angeordnete Rückstrahlungsschicht, die üblicherweise durch Bedampfen von Aluminium, Silber, Gold, Silizium oder einem ähnlichen Werkstoff mit einem guten Reflexionsvermögen im Arbeitsbereich der Wellenlängen (von 630 bis 650 nm) von standardisierten Ableseeinrichtungen aufgetragen wird. Bei der Fertigung eines für die Aufzeichnung bestimmten oder eines löschbaren Informationsträgers kann die Informationsschicht 3 gemäß dem Stand der Technik wie folgt umfassen:
- eine Registrierschicht (Aufzeichnungsschicht), die direkt auf die obere Substratseite aufgebracht wird und aus einem fotoregistrierenden Farbmittel (wie z. B. Phtolzianin) besteht, und eine Rückstrahlungsschicht (üblicherweise aus Gold oder Silber) bei der Herstellung eines für Aufzeichnungen bestimmten Informationsträgers ;
- eine erste durchsichtige wärmedämmende, auf das Substrat aufgetragene Schicht, eine Registrierschicht aus einem Werkstoff, der befähigt ist, aus einem kristallinen Zustand in einen amorphen (aus einem durchsichtigen Zustand in einen undurchsichtigen) und umgekehrt unter Beeinflussung einer Laserbestrahlung zu übergehen, eine zweite durchsichtige wärmedämmende Schicht und eine Rückstrahlungsschicht im Falle der Herstellung eines löschbaren Informationsträgers.

Sollte nun der Informationsträger nur eine einzige Informationsschicht 3 aufweisen, kann darauf eine übliche Schicht aus einem fotopolymerisierenden Schutzlack aufgetragen werden.

Ferner sind im Zentralteil des Informationsträgers zwei Zonen R₁ und R₂ gebildet, von denen die erste Zone zwischen den Durchmessern D₁ = 15 mm und D₂ = 25 mm und die zweite Zone zwischen den Durchmessern D₂ und D₃ = 33 mm angeordnet sind. Für jede von diesen Zonen ist Hⱼ, also der größte Abstand zwischen zwei gedachten parallelen Ebenen P₁ und P₂, vorgegeben, wobei P₁ eine gedachte Ebene, die Substratpunkte an der Seite S₁ in der betreffenden Zone Rⱼ enthält, und P₂ eine gedachte Ebene, die Substratpunkte an der Seite S₂ in der Zone zwischen den Durchmessern D₁ und D₃ enthält, bedeutet (d. h. im Bereich, in welchem gleichzeitig die Zone R₁ und die Zone R₂ gelegen sind). In Wirklichkeit, wenn der Informationsträger waagerecht angeordnet ist, bedeutet Hⱼ einen Abstand zwischen den voneinander am meisten entfernten, an der Senkrechten liegenden Substratpunkten, d. h. praktisch eine maximale Substrathöhe in der betreffenden Zone.

Gemäß einer ersten bevorzugten, in den Figuren 1 und 2 dargestellten Ausführungsform der Erfindung weist das Substrat an der Seite S₁, das mit einer Informationsschicht 3 versehen ist, einen ringförmigen Vorsprung 5 in der Zone R₁ auf, der zwischen den Durchmessern 17 mm und 22 mm vorgesehen ist. Hierbei fehlen in der Zone R₂ irgendwelche Vorsprünge und die Dicke des Substrates 2 ist in dieser Zone gleich derselben des Substrates in der Informationszone und beträgt vorteilhafterweise 0,6 mm.

Wie das in Fig. 2 deutlich erkennbar ist, stellt die Oberkante des Vorsprunges 5 vorteilhaft einen flachen Ring dar, der zwischen den Durchmessern 17 mm und 21 mm angeordnet ist. Die Mantelfläche des Vorsprunges 5 wird vorteilhaft kegelförmig ausgebildet, dessen Mantellinie zu einer gedachten Ebene mit der erwähnten Oberkante des Vorsprunges in Form eines Ringes in einem Winkel von unter 90° zur Erleichterung der Abnahme eines Informationsträgers von einer Gießform verläuft, indem die innere Seitenfläche des Vorsprunges 5 (längs dem Innendurchmesser 17 mm) zylindrisch ausgestaltet ist. Währenddessen ist an der Oberkante des Informationsträgers eine Gruppe von N im Grunde gleichartiger punktförmiger Warzen 6 vorgesehen, die gleichmäßig über die Oberkante verteilt sind (d. h. in gleichen Winkeln beabstandet), wobei N eine Anzahl von Warzen von mindestens 3 bedeutet, (in besonderem Fall gemäß Fig. 2 ist N gleich 6, wobei die Warzen 6 in einem Abstand von 30° angeordnet sind). Die Seitenfläche jeder Warze 6, die zwischen den Durchmessern 17 mm und 21 mm (d. h. innerhalb der ringförmigen Oberkante des Vorsprunges 5) gelegen ist, wird als ein Teil einer zylindrischen Oberfläche mit einem Halbmesser r¹ ausgebildet, während die Seitenfläche jeder Warze am Durchmesser 17 mm ebenfalls zylindrisch ausgestaltet ist, deren Halbmesser jedoch größer ist, also r² > r¹, und der mit dem Halbmesser der Krümmung der inneren Seitenfläche des Vorsprunges 5 übereinstimmt. Unterdessen kann ein Teil der Seitenfläche der Warzen 6, nämlich der an der Kante des Vorsprunges 5 längs dessen Außendurchmesser (im vorliegenden Fall 22 mm) anliegende Teil, kegelförmig mit einer Schräge von der Oberkante des genannten kegelförmigen Teiles zur Unterkante hin ausgebildet werden, derart, dass der Winkel zwischen der Erzeugenden dieses kegelförmigen Teiles und der Ebene mit der Oberkante der Warze 6 mehr als 90° ausmacht. Bei einer solchen Ausbildung des Teiles der Seitenfläche jeder Warze 6 in Verbindung mit der vorstehend beschriebenen Ausbildung der Mantelfläche des Vorsprunges 5 selbst, bei welcher diese ebenfalls kegelförmig ist und eine umgekehrte Schräge aufweist, wird die Abnahme eines Informationsträgers von seiner Gießform nicht erschwert. Dabei bilden die kegelförmigen Teile der Seitenflächen aller Warzen 6 insgesamt eine Art Schnapper, mit dessen Hilfe auf der Oberfläche des Informationsträgers gemäß der infrage kommenden Ausführungsform an dessen Seite S₂ verschiedene weitere Elemente, insbesondere verschiedene abnehmbare Visualinformationsträger (hergestellt beispielsweise aus Karton, einem Kunststoff od. dgl.), angeordnet und festgemacht werden können.

Um Spannungen in der Dicke des Substrates 2 zu verringern, welche durch das Vorhandensein des Vorsprunges 5 in dessen Zentralteil hervorgerufen werden, kann an der Seite S₂ im Bereich dieses Vorsprunges 5 eine Ringnut 7 vorgesehen werden, deren Form und Höhe an und für sich beliebig sein können und in erster Linie von verfahrenstechnischen Möglichkeiten abhängig sind, über die Fachleute bei der Ausführung der Erfindung verfügen. Im vorliegenden Fall wird jedoch die Ringnut 7 vorteilhaft so hergestellt, dass die Dickenunterschiede des Substrates im Bereich des Vorsprunges 5 und den daran anliegenden Zonen R₂ sowie in einem Teil der Zone R₁, der zwischen der Kante der Mittenöffnung 1 und dem inneren Durchmesser des Vorsprunges 5 (in diesem Fall 17 mm) gelegen ist, möglichst niedrig gehalten werden. Gemäß der infrage kommenden bevorzugten Ausführungsform der Erfindung ist die Oberfläche der Ringnut 7 ein Teil eines Torus, wobei die größte Höhe (Tiefe) h¹ der Ringnut ausgerechnet zwischen den Durchmessern 17 und 21 mm, also im Bereich des Vorsprunges 5 an der Seite S₁, feststellbar ist und 0,6 mm ausmacht. Dabei soll darauf geachtet werden, dass bei dem in Fig. 1 gezeigten Ausführungsbeispiel die größte Höhe des Substrates 2 im Bereich des Vorsprunges 5 (in der Zone R₁), also der dem Wert H₁ gleiche Abstand zwischen der Oberkante der Warzen 6 und einer gedachten Ebene P₂, in welcher eine im Wesentlichen flache Oberfläche des Substrates 2 an der Seite S₂ in der Zone R₂ und der Zone R₁ zwischen dem Rand der Mittenöffnung 1 und einer dieser am nächsten liegenden Kante der Ringnut 7 gelegen ist, 1,8 mm beträgt, wobei die Warzen 6 über die ringförmige Oberkante des Vorsprunges 5 um 0,3 mm hervorragen. Somit beträgt die minimale Substratdicke im Bereich des Vorsprunges 5 und der Ringnut 7 1,2 mm, was annähernd gleich der Substratdicke in der Zone R₁ zwischen dem Rand der Mittenöffnung und der der Mittenöffnung 1 am nächsten liegenden Kante der Ringnut 7 ist (d. h. im Bereich der Durchmesser 15 bis 16 mm, in welchem Informationsträger in Antrieben mit eigenen Befestigungsmitteln eingeklemmt werden, weshalb eben eine Dicke von max. 1,5 mm, insbesondere von ca. 1,2 mm, bevorzugt ist).

Bei dem behandelten Ausführungsbeispiel kann die Ringnut 7 auch so ausgebildet sein, dass sich die Substratdicke im Bereich des Vorsprunges 5 (mit Rücksicht auf die Ringnut 7 und die Warzen 6) von im wesentlichen 1,2 mm in der Nähe von dem inneren Rand des Vorsprunges 5 (der der Mittenöffnung am nächsten gelegen ist) bis 0,6 mm in der Nähe von dem äußeren Rand des Vorsprunges 5 verändert. Dadurch wird in diesem Fall einer unregelmäßigen Verteilung (schroffen Unterschieden) der Substratdicke 2 im Bereich des Vorsprunges 5 begegnet, indem auf diese Art und Weise Innenspannungen in dieser Zone größtmöglich abgebaut werden. Die Ringnut 7 kann aber auch derart ausgeführt werden, dass die Substratdicke im Bereich des Vorsprunges 5 annährend gleich derselben in der Zone R₂ (also gleich 0,6 mm) ist, wozu erforderlich ist, dass die Gestalt der Ringnut 7 möglichst genau solche der Oberfläche des Vorsprunges 5 nachahmt. In diesem Fall ergibt sich jedoch ein nennenswerter Dickenunterschied des Substrates 2 nahe dem Innendurchmesser (der am nächsten der Öffnung 1 gelegen ist), durch welchen der Bereich des Vorsprunges 5 auf rd. 0,6 mm begrenzt wird, wodurch innere Spannungen im Substrat 2 ansteigen und sich mechanische Beschädigungen des Informationsträgers in dieser Zone beim Ablesen der Disk bei hohen Geschwindigkeiten ergeben können. Unter diesem Aspekt erscheint ein ähnlicher Dickenunterschied des Substrates an der anderen Seite des Vorsprunges (längs dem Außendurchmesser 22 mm, durch den der Vorsprung begrenzt wird) sogar bevorzugter gegenüber dem beschriebenen Dickenunterschied nahe der Mittenöffnung 1.

Um nunmehr die glatte Oberfläche des Substrates 2 an der Seite S₂ in der Informationszone vor zufälligen Beschädigungen (Kratzern od. dgl.) zu schützen und die Kante des Informationsträgers zu dessen Verstärkung und zur Sicherung einer korrekten Ablesung vom Informationsträger bei Anwendung von Antrieben mit einer Schlitzbeschickung (von denen viele Antriebe mit Kontrollmitteln zur Kontrolle über die Kantendicke einer Disk versehen sind) zu verdicken, ist es sinnvoll, und dennoch nicht unbedingt notwendig, einen oder zwei ringförmige Vorsprünge 8, 9 (Fig. 1) an der Seite S₂ des Substrates vorzusehen. Der Vorsprung 8, dessen Querschnitt vorteilhaft die Form einer Kreis- oder EIlipsenhälfte hat, kann an einem Durchmesser D₄ hergestellt werden, welcher je nach der ausgewählten Breite des Vorsprunges 8 zwischen 34 mm und 35 mm schwanken kann. Bei dem in Fig. 1 angeführten Ausführungsbeispiel befindet sich der Mittelpunkt des Vorsprunges 8 an einem Durchmesser von 34,5 mm, wobei dessen Breite, welche zur Verhütung von inneren Spannungen in der Substratdicke 2 einen Wert von 1,4 mm nicht übertreffen darf, im vorliegenden Fall 1,2 mm und dessen Höhe, die aus dem gleichen Grunde einen Wert von 0,3 mm nicht übersteigt, hier 0,2 mm betragen. Somit verläuft die innere, dem Mittelpunkt des Informationsträgers nächstliegende Grenze des Vorsprunges 8 im vorliegenden Fall an einem Durchmesser von 33,9 mm und die äußere Grenze an einem Durchmesser von 35,1 mm. Der Vorsprung 9 wird an der Kante des Informationsträgers mit einem Innendurchmesser, der nicht kleiner als D_{H} = 2 mm ist, hergestellt, wobei D_{H} einen Durchmesser des gesamten Informationsträgers bedeutet, der normalerweise aus einem Bereich im Wesentlichen von 80 mm bis 120 mm ausgewählt wird. Bei dem in Fig. 1 gezeigten Ausführungsbeispiel ist der Innendurchmesser des Vorsprunges 9 vom Rand des Informationsträgers um 1,3 mm entfernt, wobei die Breite W_{EO} des Vorsprunges 9, die bevorzugterweise einen Wert von 1 mm nicht übertrifft, in diesem Fall 0,8 mm und die Höhe h_{EO}, die vorteilhaft aus einem Bereich von 0,1 mm bis 0,5 mm ausgewählt wird, 0,2 mm beträgt.

Es sei betont, dass zur Senkung von inneren Spannungen in der Substratdicke 2 an der Seite S₂ statt der beschriebenen massiven ringförmigen Vorsprünge 8 und 9 an der Seite S₂ zwei Gruppen von punktförmigen Vorsprüngen herstellbar sind, wobei jeder von diesen punktförmigen Vorsprünge die gleiche Breite und Höhe wie dieselben der ihnen entsprechenden Vorsprünge 8 und 9 aufweist. Die besagten punktförmigen Vorsprünge sind vorteilhaft äquidistant gegenüber einander (innerhalb einer Gruppe der Vorsprünge, die statt eines der massiven Vorsprünge 8 oder 9 herstellbar sind) um gleiche Winkel α₁ (für die Vorsprünge der ersten Gruppe) und α₂ (für die Vorsprünge der zweiten Gruppe), wobei jeder der angegebenen Winkel αⱼ durch die Anzahl nⱼ der betreffenden punktförmigen Vorsprünge in der jeweiligen Gruppe (jeweils αⱼ = 360 ⁰/nⱼ für j = 1, 2) bestimmt wird. Es ist aber auch möglich, dass die punktförmigen Vorsprünge nicht an Stelle der beiden massiven Vorsprünge 8, 9, sondern an Stelle nur eines davon hergestellt werden, wobei der andere Vorsprung (falls er vorhanden ist) auch massiv, wie zuvor beschrieben, ausgeführt wird.

Am Ende der Beschreibung der ersten bevorzugten Ausführungsform der Erfindung, bei der die Halterung des Informationsträgers durch dessen Klemmung in der Zone R₁ erzielt wird, soll darauf hingewiesen werden, dass die Form des Vorsprunges 5 in der Zone R₁ auch anders als die vorstehend beschriebene sein kann und dass der Vorsprung 5 eine andere Höhe aufweisen und sich unmittelbar bis an den Durchmesser D₂ = 25 mm erstrecken kann. Insbesondere kann die maximale Höhe des Substrates H₁ in der Zone R₁, welche sich nach der Höhe des Vorsprunges 5 richtet, zwischen 1,05 mm (falls der Vorsprung maximal nahe einem Durchmesser von 25 mm gelegen ist) und 2,2 mm (wenn jeweils der Vorsprung von einem Außendurchmesser von 25 mm der Zone R₁ entfernt und nahe der Mittenöffnung gelegen ist) betragen, wobei dieser Vorsprung 5 keine Warzen 6 enthalten kann, d. h. dass er mit einer Oberkante in Form eines flachen Ringes versehen ist. Möglich ist es aber auch, dass nicht ein Vorsprung, sondern mehrere Vorsprünge, die eine ringförmige und/oder eine (geöffnete) Endform (und beispielsweise radial oder tangential gegenüber der Mittenöffnung 1 angeordnet sind) aufweisen, hergestellt werden. Dementsprechend kann an der unteren Seite S₂ im Bereich des genannten Vorsprunges und/oder der Vorsprünge die Oberfläche des Substrates 2 glatt ausgebildet werden oder eine oder mehrere Nuten zur Verminderung der Substratdicke im Bereich der Vorsprünge an der Seite S₁ aufweisen. Die Anordnung des Substrates 2 mit einer Dicke von max. 1,5 mm in der Zone, die durch Durchmesser von 15 bis 16 mm begrenzt ist, ist vorteilhaft, jedoch nicht obligatorisch, so dass die herzustellenden Vorsprünge eigentlich am Rande der Mittenöffnung (also an einem Durchmesser von 15 mm) anfangen können. Je kürzer der Abstand zwischen dem äußeren Rand des Vorsprunges, welcher an dem Halbmesser von dem Mittelpunkt der Öffnung 1 am meisten entfernt ist, und der Kante dieser Öffnung 1 ist, desto größer ist der Wert H₁, und umgekehrt kann der Wert H₁ mit der Annäherung des genannten äußeren Randes des Vorsprunges an den die Zone R₁ begrenzenden Durchmesser D₂ = 25 mm abnehmen.

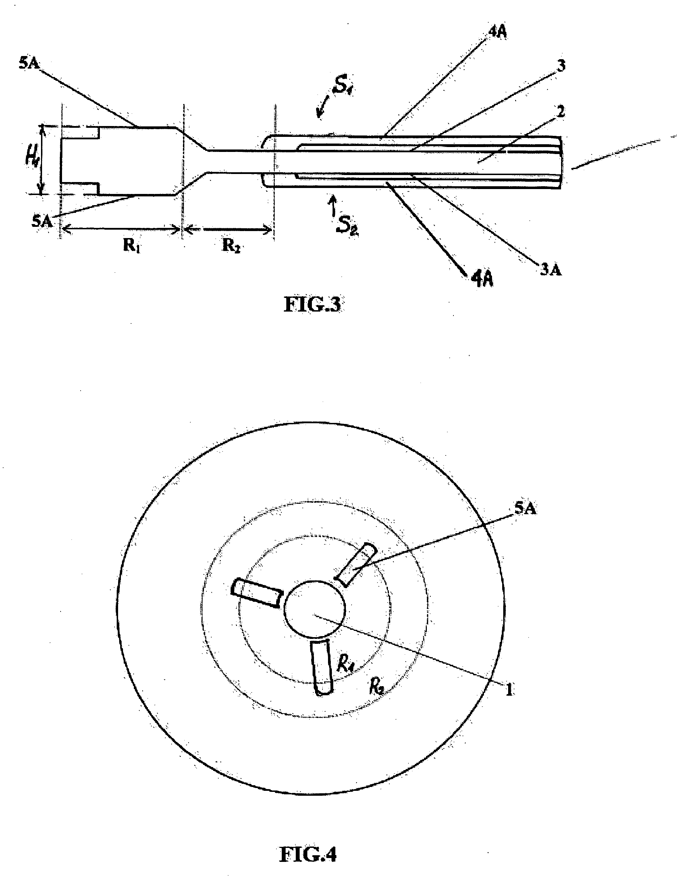

Des Weiteren sind besondere Ausführungsformen der Erfindung möglich, bei denen der Informationsträger eine zweite Informationsschicht 3A (siehe Fig. 3) besitzen kann, die in einer Informationszone des Informationsträgers an dessen Seite S₂ vorgesehen ist.

In diesem Fall kann je nach dem Format von auf den Informationsschichten 3 und 3A aufgezeichneten Daten das Ablesen von Informationen insbesondere bei Anwendung eines roten Laserstrahlen (mit 630 bis 650 nm Wellenlänge) und einer standardisierten Apertur von 0,65 oder einer aussichtsreichen Anlage auf Basis eines blauen (ultravioletten) Laserstrahlen (mit 405 nm Wellenlänge) in Verbindung mit derselben Apertur von 0,65 (welche Anlage mit Angabe deren Hauptparameter bereits als realisiert öffentlich verkündet worden ist) vorgenommen werden, und zwar:
(a) über die Seite S₁ von der an der Seite S₂ angeordneten Informationsschicht 3A her und
(b) über die Seite S₁ von der an der Seite S₁ angeordneten Informationsschicht 3 her,

sowie bei Anwendung einer aussichtsreichen Anlage auf Basis eines blauen (ultravioletten) Laserstrahlen (mit 405 nm Wellenlänge) in Verbindung mit einer Apertur von 0,85 (welche Anlage ebenfalls mit Angabe deren Hauptparameter bereits als realisiert öffentlich verkündet worden ist), und zwar:
(a) an der Seite S₁ von der Informationsschicht 3 her, die an dieser Seite S₁ vorgesehen ist, und
(b) an der Seite S₂ von der Informationsschicht 3A her, die an dieser Seite S₂ vorgesehen ist.

Infolge dessen, dass in der jüngsten Zeit die Möglichkeit der Schaffung eines einheitlichen optischen Systems zum Ablesen von Informationen unter Einsatz eines blauen (ultravioletten) Laserstrahlen mit einer Apertur sowohl von 0,65 als auch von 0,85 verkündet wurde, kann künftig das Ablesen eines Informationsträgers über eine der Seiten S₁ und S₂ an den beiden Informationsschichten 3 und 3A vorgenommen werden.

Es ist dabei lohnend, auf jede Informationsschicht 3 und 3A eine dünne Schicht (mit einer Dicke von max. 0,1 mm) eines optisch durchsichtigen Werkstoffes aufzutragen, welche gleichzeitig einen normalen Schutz der Informationsschicht gegen Beschädigungen sichert und parallel dazu den Durchgang des Laserstrahlen dadurch nicht verhindert (also keine Absorption und keine Reflexion des Laserstrahlen). Im Aspekt der vorliegenden Erfindung kann in der Eigenschaft eines solchen optisch durchsichtigen Werkstoffes ein beliebiger fotopolymerisierender Lack eingesetzt werden, der z. Z. auf diesem technischen Gebiet Anwendung findet.

Es begreift sich leicht, dass an drei vorstehend beschriebenen Verfahren zum Informationsablesen von zwei Informationsschichten 3 und 3A lediglich bei nur einem Verfahren (bei dem letzteren, in welchem eine aussichtsreiche Anlage verwendet wird) es nicht erforderlich ist, den Informationsträger im Zuge dessen Wiedergabe (und/oder Aufzeichnung und/oder Neuaufzeichnung) umzuwenden. Folglich kann in diesem Fall die Halterung des Informationsträgers im Antrieb in ähnlicher Weise bewerkstelligt werden, wie dies bei der vorstehend beschriebenen ersten bevorzugten Ausführungsform der Erfindung der Fall ist.

Bei den anderen Ausführungsformen soll bei einer ununterbrochenen Ablesung (oder Aufzeichnung oder Neuaufzeichnung) von der ersten Informationsschicht 3 und der zweiten Informationsschicht 3A (vorausgesetzt, es wird kein optisches Doppelsystem eingesetzt, bei welchem die Leseköpfe an unterschiedlichen Seiten des Informationsträgers installiert sind) der Informationsträger im Antrieb nach der Ablesung (Aufzeichnung oder Neuaufzeichnung) von der ersten Informationsschicht (3 oder 3A) umgewendet (umgestellt) werden. Es ist dabei klar, dass für eine richtige Ablesung von einem solchen doppelseitigen Informationsträger (also einem Informationsträger mit zwei Informationsschichten) dieser in einem Antrieb bei dessen Ausrichtung auf den Lesekopf mit beliebiger Seite gleich gut befestigbar sein soll.

Es erscheint in diesem Fall zweckmäßig, den Zentralteil des Informationsträgers mit überstehenden Abschnitten sowohl an der Seite S₁ wie auch an der Seite S₂ zu versehen. Bei Vorhandensein der überstehenden Abschnitte nur an einer einzigen Seite kann eine korrekte Informationsablesung von nur einer Informationsschicht stattfinden, während sich nach dem Umwenden des Informationsträgers Probleme bei der Informationsablesung von der zweiten Informationsschicht ergeben können.

Es kommt darauf an, dass bei meisten, z. Z. bekannten Antrieben der Aufbau der oberen Druckbuchse (diese ist in der Zone R₁ kuppelförmig ausgestaltet und besitzt einen flachen Andrückring in der Zone R₂ einer standardisierten Klemme) im wesentlichen ähnlich ist und nur geringe Unterschiede aufweist. Währenddessen ist bei einer Anzahl von Antrieben zwischen Durchmessern von 15 mm und 25 mm (also in der Zone R₁ des Informationsträgers) an der unteren Seite des Antriebes eine Vertiefung zu verzeichnen, deren Tiefe nicht genormt ist und sich je nach dem Modell eines Antriebes in ziemlich weiten Grenzen verändern kann. Aus diesem Grunde lässt sich der Informationsträger bei Vorhandensein eines massiven Vorsprunges (oder mehrerer Vorsprünge) in der Zone R₁, dessen Höhe im Einklang mit der vorliegenden Erfindung festgelegt ist, bei der Aufbringung der Disk mit der nach oben weisenden Seite mit dem darauf befindlichen Vorsprung unter Zuhilfenahme des kuppelförmigen Teiles der Buchse erfolgreich befestigen, indem er jedoch in die genannte Vertiefung mit dem Vorsprung nach seinem Umwenden und Aufbringen mit der nach oben weisenden Seite durchfallen kann, so dass eine sichere Halterung der Disk in einem solchen Antrieb und eine korrekte Ablesung der Information von der zweiten Informationsschicht nicht zu erwarten ist.

Andererseits, selbst wenn in einem irgendwelchen konkreten Antrieb die angegebene Vertiefung fehlt, wird durch das Vorhandensein eines ziemlich großen Vorsprunges (oder von großen Vorsprüngen) auf nur einer Seite (in der Zone R₁ und/oder der Zone R₂) die Informationsschicht von dem Lesekopf bei der Anordnung des Informationsträgers mit dem nach unten weisenden Vorsprung (oder den Vorsprüngen) beachtlich beabstandet, so dass im letzteren Fall es unmöglich sein kann, eine zuverlässige Fokussierung des Lesekopfes (insbesondere bei hohen Lesegeschwindigkeiten) zu garantieren und eine Informationsablesung vom Informationsträger ohne grobe Fehler zu sichern.

Die oben erwähnten Schwierigkeiten können eine wesentliche Beschränkung des Anwendungsgebietes eines erfindungsgemäßen doppelseitigen Informationsträgers nach sich ziehen, wenn in dessen Zentralteil nur an einer einzigen Seite des Substrates 2 überstehende Abschnitte vorgesehen sind. Obwohl im Rahmen der vorliegenden Erfindung dies als möglich angenommen wird, erscheint jedoch die Ausbildung der überstehenden Abschnitte an nur einer Seite eines doppelseitigen Informationsträgers als nicht ganz sinnvoll.

Es erscheint hierbei als besonders günstig, die genannten überstehenden Abschnitte an den beiden Seiten eines Informationsträgers derart auszubilden, dass zumindest an jeder Seite des Informationsträgers mindestens einer der überstehenden Abschnitte mindestens teilweise in der Zone R₂ gelegen ist.

Dies gestattet, Schwierigkeiten zu umgehen, die mit dem Vorhandensein der erwähnten Vertiefung an der Unterseite mancher Antriebe verknüpft sind, und einen geringen Abstand zwischen jeder der Informationsschichten und dem Lesekopf sicherzustellen, so dass Lesefehler minimisiert oder gar ausgeschlossen werden, die durch eine Neufokussierung des Lesekopfes verursacht werden, wobei durch eine Abnahme der Masse der an den beiden Seiten des Informationsträgers überstehenden Abschnitte eine annehmbare Größe von Innenspannungen im Zentralteil des Informationsträgers erreichbar ist.

In den Figuren 3 bis 7 sind verschiedene besondere Ausführungsformen der überstehenden Abschnitte dargestellt, die sowohl an der einen Seite, als auch an der anderen Seite eines Substrates vorgesehen sind.

Bei einem in den Figuren 3 und 4 veranschaulichten Ausführungsbeispiel weist der Informationsträger, wie auch zuvor beschrieben, eine Mittenöffnung 1 auf, die in einem gegossenen Substrat 2 hergestellt ist. Des Weiteren besitzt der Informationsträger zwei Informationsschichten 3 und 3A, von denen die eine Informationsschicht an der Seite S₁ des Substrates 2 und von denen die andere an der Seite S₂ des Substrates 2 vorgesehen ist. Auf jeder von diesen Informationsschichten 3, 3A ist eine zuvor beschriebene Lage aus einem optisch durchsichtigen Werkstoff 4A aufgebracht.

Gemäß dem in den Figuren 3 und 4 gezeigten Ausführungsbeispiel sind an jeder Seite des Informationsträgers radial zum Mittelpunkt der Disk angeordnete Vorsprünge 5A vorgesehen, deren Anzahl vorteilerhafterweise mehr als zwei ist (Fig. 4 zeigt eine Ausführungsform mit drei Vorsprüngen), die jedoch bevorzugt nicht sehr groß sein soll, damit an den Standorten dieser Vorsprünge 5A kein Anstieg von Spannungen in der Substratdicke 2 stattfindet. An der Seite S₁ können die Vorsprünge 5A zu denselben an der Seite S₂ symmetrisch angeordnet werden (d. h. an denselben Stellen, bei derselben Menge, mit derselben Form und denselben Massen), obwohl dies nicht notwendig ist und die Menge, die Masse und selbst die Form der Vorsprünge 5A an verschiedenen Seiten des Informationsträgers unterschiedlich sein können.

Jeder von den radialen Vorsprüngen, die besser in Fig. 4 erkennbar sind, beginnt an einem Durchmesser von 17 mm und erstreckt sich bis an einen Durchmesser von 26 mm, wobei die Dicke jeden Vorsprunges 2 mm ausmacht. Die Höhe jeden von diesen Vorsprüngen 5A (sowohl an der Seite S₁, als auch an der Seite S₂), gerechnet von dem an jeden davon anliegenden, im wesentlichen flachen Teil des Substrates 2, beträgt gemäß dem angeführten Ausführungsbeispiel 0,3 mm, so dass sich in der Zone R₂ der Wert H₂, der gleich dem Abstand zwischen einer die Oberkanten der Vorsprünge 5A an der Seite S₁ enthaltenden Ebene und einer die Unterkanten der Vorsprünge 5A an der Seite S₂ enthaltenden Ebene ist, auf 1,2 mm beläuft, wobei den gleichen Wert auch H₁ annimmt. In der Nähe von der Kante der Mittenöffnung 1 (d. h. im Bereich von Durchmessern 15 bis 16 mm) beläuft sich die Dicke des Substrates, wie auch zuvor, auf 1,2 mm, was notwendig ist, um den Informationsträger in Antrieben mit eigenen Andrückmitteln befestigen zu können.

Daraus geht es klar hervor, dass sich die Vorsprünge 5A in dem geschilderten Fall von einem Durchmesser von 15 mm bis an einen Durchmesser von 33 erstrecken oder zwischen einem Durchmesser von 25 mm und einem Durchmesser von 33 mm vollständig angeordnet werden können (zumindest einer von den Vorsprüngen 5A kann in dieser Weise an jeder der Seiten ausgebildet werden). Unterdessen lohnt es sich besser, wie dies bereits vorstehend betont, zur Verhütung einer starken Doppelbrechung im Anfang der Informationsschicht die vom Mittelpunkt des Informationsträgers am meisten beabstandeten Ränder der Vorsprünge 5A näher an einen Durchmesser von 25mm zu versetzen. Aus demselben Grund dürfen die Vorsprünge 5A nicht zu massig (breit) gebildet werden, ihre Breite wird vorteilhaft aus einem Bereich von 0,3 mm bis 3 mm ausgewählt, während die Höhe mit Rücksicht auf die in dieser Erfindung formulierten Forderungen an H₂ variiert und mit Blick auf die bevorzugte Beziehung 1,1 mm ≤ H₂ ≤ 1,5 mm ausgewählt wird.

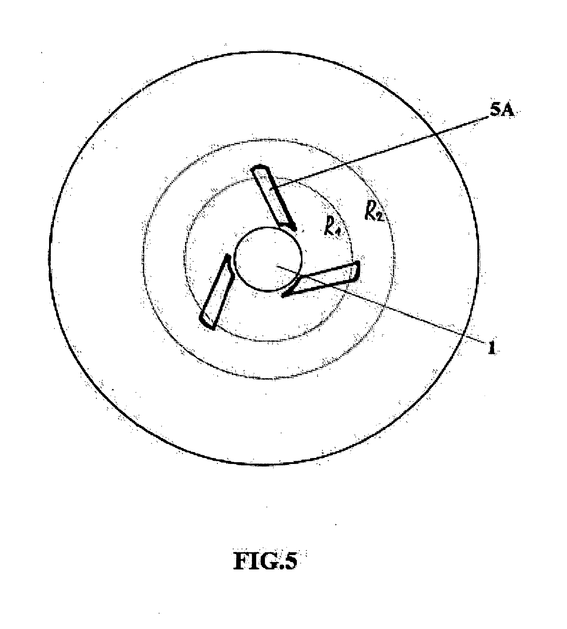

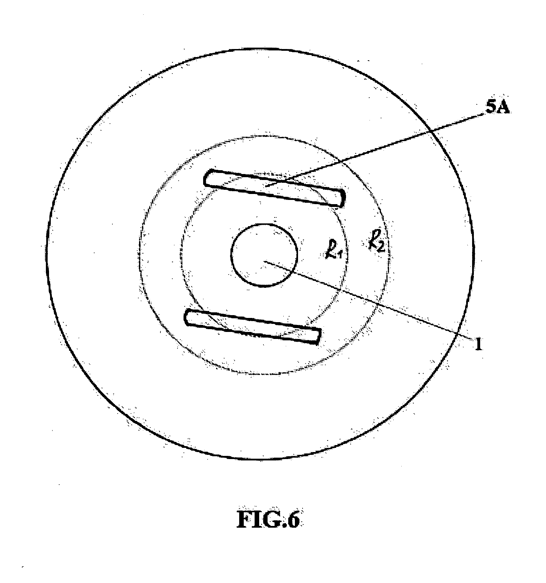

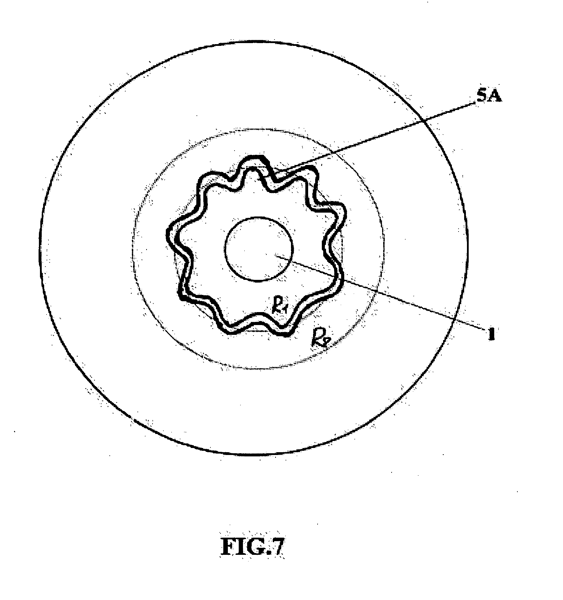

Die in den Figuren 5 bis 7 gezeigten Ausführungsbeispiele unterscheiden sich von dem eben beschriebenen Ausführungsbeispiel nur durch die Form der überstehenden Abschnitte. In Fig. 5 ist ein Ausführungsbeispiel von tangentialen Vorsprüngen 5A, in Fig. 6 solches von Sehnenvorsprüngen (Sekanten-) und in Fig. 7 solches von einem geschlossenen gewellten Vorsprung 5A (zwei gewellten Vorsprüngen, je einen an jeder der Seiten, ein zweiter ist nicht gezeigt) veranschaulicht, wobei der letztere am bevorzugtesten vom verfahrenstechnischen Standpunkt aus ist.

Es sei dabei betont, dass bei Vorhandensein der Vorsprünge 5A mindestens teilweise in der Zone R₂ die Form des Informationsträgers in der Zone R₁ nicht mehr ausschlaggebend ist. Die einzige, bereits vielfach erwähnte Voraussetzung ist, dass in der Nähe von der Kante der Mittenöffnung 1 die Substratdicke im wesentliche gleich 1,2 mm sein soll.

Es sei weiter darauf hingewiesen, dass die in den Figuren 4 bis 7 gezeigten Vorsprünge 5A nicht nur für einen doppelseitigen Informationsträger, sondern auch für einen einseitigen (mit nur einer Informationsschicht) vorgesehen werden können. In diesem Fall werden den in Figuren 4 bis 7 veranschaulichten Vorsprüngen 5A ähnliche Vorsprünge an der oberen Seite (S₁) des Informationsträgers angeordnet, indem der letztere durch einen flachen Ring einer Druckbuchse im Antrieb angedrückt wird. Der Unterschied von den beschriebenen Ausführungsbeispielen besteht darin, dass die genannten Vorsprünge in einem einseitigen Informationsträger massiver sein sollen als die Vorsprünge 5A einer doppelseitigen Disk (zumindest in Bezug auf die Höhe, damit die formulierte Forderung an H₂ erfüllt wird). Somit können zur Abnahme von inneren Spannungen im Substrat 2 an den Standorten der Vorsprünge in einem einseitigen Informationsträger an dessen Unterseite Nuten (mit Rücksicht auf die Forderungen, die bei der Beschreibung des ersten bevorzugten Ausführungsbeispiels angeführt wurden) hergestellt werden, wobei die Vorsprünge selbst eine kleinere Breite aufweisen und an den Mittelpunkt des Informationsträgers näher als identische Vorsprünge 5A in einem doppelseitigen Informationsträger angeordnet werden können.

Ein erfindungsgemäßer Informationsträger kann durch eine Methode zur Injektions-Gussreplikation auf einer bekannten Anlage hergestellt werden, die normalerweise bei der Fertigung von CDs (einseitigen CDs) oder von digitalen Mehrzweckdisks hoher Dichte (vornehmlich doppelseitigen Disks) bei Anwendung eines bekannten Verfahrens zum Kompressionsguss bei unwesentlichen Änderungen der Vorgehensweise bei der Durchführung einzelner Verfahrensschritte und bei unbedeutenden Verbesserungen der Ausrüstungen, bedingt durch den neuen konstruktiven Aufbau des Informationsträgers, eingesetzt wird.

In einem ersten Schritt wird ein Substrat 2 durch einen Injektions-Kompressionsguss aus beispielsweise einem optischen Polykarbonat (insbesondere Makrolon^{™} der Fa. Bayer, Lexan^{™} der Fa. General Electric, Jupilon^{™} der Fa. Mitsubishi od. dgl.) hergestellt, das bei der Fertigung von CDs und digitalen Mehrzweckdisks hoher Dichte benutzt wird. Bei der Herstellung von im Voraus mit einer Aufzeichnung versehenen Informationsträgern wird auf einer Seite (oder auf beiden Seiten) eines Substrats (in einem der Informationszone entsprechenden Bereich, dessen Masse bei unterschiedlichen Typen von Disks schwanken kann) mit Hilfe einer zuvor vorbereiteten Matrize (bzw. Matrizen) ein Informationsmikrorelief in Form einer Gruppe von Pits hergestellt. Insbesondere für einen späteren Einsatz des Informationsträgers in standardisierten Ablesesystemen bei Anwendung eines roten Laserstrahlen können Matrizen mit einer Information benutzt werden, welche bei einer konstanten linearen Geschwindigkeit (Constant linear velocity - CLV) und einem Aufzeichnungsschritt von 0,4 mm und darüber aufgezeichnet wurde. Bei der Herstellung von zur Aufzeichnung geeigneten oder löschbaren Informationsträgern sollen während des Giessens jeweilige Spiralspuren mit einer Markierung zur Aufzeichnung/Neuaufzeichnung/Lesen von Informationen gebildet werden.

Um einen ringförmigen Vorsprung 5 mit einem Relief gemäß der ersten bevorzugten Ausführungsform der Erfindung oder Vorsprünge 5A gemäß den weiteren Ausführungsformen (einschl. solcher mit Nuten 7 oder ohne sie) herstellen zu können, soll die betreffende Oberfläche einer Gießform eine entsprechende Vertiefung (oder als Vertiefung ausgebildete Nuten), die ihren Massen und dem Standort nach den Massen und dem Standort eines ringförmigen Vorsprunges 5A (von Vorsprüngen 5A) entspricht (entsprechen). In ähnlicher Weise hat die einschlägige Oberfläche der Gießform Ringnuten zur Herstellung von ringförmigen Vorsprüngen 8 und 9 bzw. punktförmige Vertiefungen zur Ausbildung einer Folge von punktförmigen Vorsprüngen an der glatten durchsichtigen Oberfläche aufzuweisen. Um eine Ringnute 7 herzustellen, soll an der betreffenden Oberfläche der Gießform eine ringförmige Eindrehung vorgesehen werden, in welcher ein als Vorsprung ausgestaltetes Einsatzstück angeordnet und befestigt ist, dessen Außenfläche der gewünschten Form der Oberfläche der Nut entspricht.

Um der Entstehung übermäßiger Spannungen im Zentralteil eines Informationsträgers zu begegnen und somit eine Doppelbrechung im anfänglichen Bereich der Informationszone zu vermindern, kann die Anfangsgeschwindigkeit der Karbonatinjektion mindestens doppelt so gering sein, während bei der Bildung der Informationszone die Injektionsgeschwindigkeit auf den genormten Wert erhöht werden kann.

Nach dem Giessen eines Substrates wird dieses abgekühlt, wonach Schichten zur Speicherung und/oder Aufzeichnung und/oder Wiedergabe einer Information aufgetragen werden.

Insbesondere bei der Herstellung eines für eine vorherige Aufzeichnung geeigneten Informationsträgers wird eine Vakuummetallisierung zumindest eines Teiles der ein Informationsmikrorelief enthaltenden Substratoberfläche unter Anwendung von Aluminium oder einem anderen reflektierenden Werkstoff vorgenommen, wodurch eine Rückstrahlungsschicht gebildet wird. Es sei insbesondere darauf hingewiesen, dass in diesem Fall sowohl die gesamte Oberfläche, als auch nur deren Teil mit dem darauf aufgebrachten Mikrorelief metallisiert werden kann. Anschließend wird auf die metallisierte Oberfläche eine Schicht aus einem bei diesen Anwendungen standardisierten fotopolymerisierenden Lack mit Hilfe einer standardisierten Fliehkrafteinrichtung (Zentrifuge) aufgetragen, wonach der Lack durch eine UV-Strahlung in einem UV-Ofen erhärtet wird. Bei der Fertigung von Informationsträgern zur Aufzeichnung oder Neuaufzeichnung bestehen die Änderungen der vorstehend dargelegten Verfahrensweise nur darin, dass zwischen der Rückstrahlungsschicht und der Substratoberfläche zusätzliche Schichten aufgetragen werden, wozu auf diesem technischen Gebiet übliche Verfahren zum Einsatz gelangen können. Bei der Herstellung eines doppelseitigen Informationsträgers wird statt des fotopolymerisierenden Lackes an jeder Seite des Substrates 2 eine dünne Schicht aus einem optisch durchsichtigen Werkstoff aufgebracht.

Danach übt man eine Kontrolle über die Qualität der Informationsträger in einer Teststation aus und ausgehend von Scanning-Ergebnissen und der Erkennung von optischen Mängeln weist man Informationsträger zurück. Die Informationsträger, deren Prüfung mit guten Ergebnissen geendet hat, können dann einem Anstreichen zugeführt werden, bei welchem auf einen Lacküberzug und/oder direkt auf das Polykarbonat eine oder mehrere Farbenschichten mit je einer Dicke von 10 bis 30 mµ aufgetragen werden. Als Folge hiervon bildet sich eine farbenreiche Etikette, welche über den Inhalt des Informationsträgers und dessen gesamte Kapazität informiert und eine Markierung (ein Warenzeichen) mit Angabe des Herstellers od. dgl. enthält. Es ist wünschenswert, die gefärbten Disks ausgehend von der Anzahl von Fehlern und der Qualität des Anstriches mit Hilfe einer automatischen Prüfungsstation zusätzlich auszusortieren.

Die Dauer eines Herstellungszyklus bei der Herstellung nur eines Informationsträgers (ohne Berücksichtigung des Anstriches) beläuft sich auf etwa 4 Sekunden, was mehr als doppelt so wenig ist als der Herstellungszyklus bei der Herstellung einer einseitigen digitalen Mehrzweckdisk hoher Dichte mit einer Kapazität von 4,7 Gigabit. Bei einem Außendurchmesser von 120 mm hat der hergestellte Informationsträger eine Masse von ca. 8,5 g, was nahezu doppelt so wenig ist als die Masse einer digitalen Mehrzweckdisk hoher Dichte mit einem gleichen Durchmesser. Auf diese Art und Weise erreicht man eine fast doppelte Einsparung am Rohstoff (dem Polykarbonat) im Vergleich zu digitalen Mehrzweckdisks hoher Dichte. Darüber hinaus wird eine mit einer digitalen Mehrzweckdisk hoher Dichte vergleichbare Aufzeichnungsdichte erzielt, die fast um das Achtfache die Aufzeichnungsdichte eines Informationsträgers in Form einer CD übertrifft, welcher dem beanspruchten Informationsträger nach seinen Abmessungen und der Masse ähnelt. Fernerhin kennzeichnet sich der anmeldungsgemäße Informationsträger im Vergleich zu bekannten CDs und digitalen Mehrzweckdisks hoher Dichte durch eine bessere Funktionstüchtigkeit, einschl. eines höheren Schutzes gegen zufällige Beschädigungen der Informationszone, sowie durch eine bessere Fertigungsgerechtheit dank einer effizienten und sparsamen Benutzung von üblichen Anlagen und auf diesem technischen Gebiet gut bekannten und gangbaren Werkstoffen.

### Gewerbliche Anwendbarkeit

Diese Erfindung eignet sich für verschiedene technische Bereiche zur Speicherung und Aufzeichnung von 4,7 Gigabit (bei einem einseitigen Informationsträger) bis etwa 10 Gigabit (bei einem doppelseitigen Informationsträger) von Audio- und Videoinformationen sowie von anderen Informationsarten bei Anwendung von bestehenden modernen Anlagen zur Wiedergabe/Aufzeichnung von Informationsträgern in Form von digitalen Mehrzweckdisks hoher Dichte (mit einer Wellenlänge eines Laserstrahlen von 630 bis 650 nm) sowie von 15 Gigabit (bei einem einseitigen Informationsträger) und darüber bei Anwendung von aussichtsreichen Anlagen (mit einer Wellenlänge von 405 bis 450 nm und darunter). Die Herstellung von Informationsträgern kann mit standardisierten Ausrüstungen, die bei der Fertigung von CDs und digitalen Mehrzweckdisks hoher Dichte in Frage kommen, bei unbedeutender Modifikation einer Gießform und von Hilfsausrüstungen sowie bei unwesentlichen Änderungen der Gießbedingungen, die durch die neuen geometrischen Charakteristiken des erfindungsgemäßen Informationsträgers bedingt sind, vorgenommen werden.

## Patentansprüche

1. Informationsträger in Form einer Disk, mit einer Mittenöffnung zur Halterung des Informationsträgers in einer Ableseeinrichtung, mindestens einem Substrat mit einer ersten Seite S₁ und einer zweiten Seite S₂ und mindestens einer Informationsschicht zur Speicherung und/oder Aufzeichnung und/oder Ablesung einer Information mittels eines Laserstrahlen,
**dadurch gekennzeichnet,**
**dass** im Zentralteil des Informationsträgers eine zwischen Durchmessern D₁ und D₂ gelegene Zone R₁ und eine zwischen Durchmessern D₂ und D₃ gelegene Zone R₂ vorgesehen sind, wobei Dᵢ den Durchmesser einer zur Mittenöffnung des Informationsträgers konzentrischen Kreislinie bedeutet, i = 1 ... 3 ist, wobei weiter D₁ im wesentlichen 15 mm, D₂ im wesentlichen 25 mm und D₃ im wesentlichen 33 mm betragen und für jede Zone Rⱼ, wo j = 1 ... 2 ist, Hⱼ, also der größte Abstand zwischen zwei gedachten parallelen Ebenen, von denen die erste Ebene an der Seite S₁ in der Zone Rⱼ gelegene Punkte des Substrates und von denen die zweite an der Seite S₂ in einer Zone zwischen den Durchmessern D₁ und D₃ gelegene Punkte des Substrates aufweist, festgelegt ist, wobei H₁ ≤ 2,2 mm, H₂ ≤ 1,5 mm und bei H₂ < 1,0 mm der Wert H₁ ≥ 1,05 mm sind und die Substratdicke mindestens im Bereich der Informationsschicht max. 0,8 mm ausmacht.

2. Informationsträger nach Anspruch 1,
**dadurch gekennzeichnet,**
**dass** er nur eine an der Seite S₁ eines Substrates angeordnete Informationsschicht aufweist.

3. Informationsträger nach Anspruch 2,
**dadurch gekennzeichnet,**
**dass** er mindestens einen ringförmigen Vorsprung an der Seite S₁ besitzt.

4. Informationsträger nach Anspruch 3,
**dadurch gekennzeichnet,**
**dass** der genannte ringförmige, an der Seite S₁ gelegene Vorsprung zwischen Durchmessern von im Wesentlichen 17 mm und 22 mm vorgesehen ist.

5. Informationsträger nach Anspruch 4,
**dadurch gekennzeichnet,**
**dass** an der Oberkante des genannten ringförmigen Vorsprunges, in gleichen Winkeln beabstandet, N im Wesentlichen gleiche Warzen angeordnet sind, wobei N > 3 bedeutet.

6. Informationsträger nach Anspruch 5,
**dadurch gekennzeichnet,**
**dass** zumindest ein Teil der Seitenfläche jeder von den genannten N Warzen kegelförmig ausgebildet ist, wobei der Winkel zwischen der Erzeugenden des kegelförmigen Teiles jeder Warze und einer die Oberkante dieser Warze enthaltenden Ebene mehr als 90° beträgt.

7. Informationsträger nach einem der Ansprüche 3 bis 6,
**dadurch gekennzeichnet,**
**dass** zwischen Durchmessern von 15 mm und 17 mm die Substratdicke nicht mehr als 1,5 mm beträgt.

8. Informationsträger nach einem der Ansprüche 3 bis 7,
**dadurch gekennzeichnet,**
**dass** H₁ im Wesentlichen gleich 1,8 mm ist.

9. Informationsträger nach Anspruch 1,
**dadurch gekennzeichnet,**
**dass** er eine erste, an der Seite S₁ des Substrates gelegene Informationsschicht und eine zweite, an der Seite S₂ des Substrates gelegene Informationsschicht aufweist.

10. Informationsträger nach Anspruch 2 oder 9,
**dadurch gekennzeichnet,**
**dass** er N₁ Vorsprünge an der Seite S₁ aufweist, wobei N₁ ≥ 1 ist.

11. Informationsträger nach Anspruch 10,
**dadurch gekennzeichnet,**
**dass** mindestens einer von N₁ Vorsprüngen als Endvorsprung ausgebildet ist.

12. Informationsträger nach Anspruch 11,
**dadurch gekennzeichnet,**
**dass** mindestens ein Endvorsprung radial ausgeführt ist.

13. Informationsträger nach Anspruch 11,
**dadurch gekennzeichnet,**
**dass** mindestens ein Endvorsprung tangential ausgeführt ist.

14. Informationsträger nach Anspruch 11,
**dadurch gekennzeichnet,**
**dass** mindestens einer von N₁ Vorsprüngen geschlossen, also endlos, ausgeführt ist.

15. Informationsträger nach Anspruch 11,
**dadurch gekennzeichnet,**
**dass** mindestens ein geschlossener Vorsprung ringförmig ausgeführt ist.

16. Informationsträger nach Anspruch 15,
**dadurch gekennzeichnet,**
**dass** der genannte ringförmige Vorsprung bei einer Exzentrizität bezüglich des Mittelpunktes des Informationsträgers angeordnet ist.

17. Informationsträger nach Anspruch 14,
**dadurch gekennzeichnet,**
**dass** mindestens ein geschlossener Vorsprung - im Grundriss gesehen - gewellt ausgeführt ist.

18. Informationsträger nach Anspruch 2 oder 9,
**dadurch gekennzeichnet,**
**dass** er N₂ Vorsprünge an der Seite S₂ aufweist, wobei N₂ ≥ 1 ist.

19. Informationsträger nach Anspruch 10,
**dadurch gekennzeichnet,**
**dass** er N₂ Vorsprünge an der Seite S₂ aufweist, wobei N₂ ≥ 1 ist.

20. Informationsträger nach Anspruch 19,
**dadurch gekennzeichnet,**
**dass** mindestens ein Vorsprung an der Seite S₂ geschlossen ausgeführt ist.

21. Informationsträger nach Anspruch 20,
**dadurch gekennzeichnet,**
**dass** der genannte Vorsprung an der Seite S₂ - im Grundriss gesehen - gewellt ausgeführt ist.

22. Informationsträger nach einem der Ansprüche 10 bis 17, 20 und 21,
**dadurch gekennzeichnet,**
**dass** 1,1 mm ≤ H₂ ist.

23. Informationsträger nach einem der Ansprüche 1 bis 22,
**dadurch gekennzeichnet, dass** an der Seite S₂ am Durchmesser D₄ ein ringförmiger Vorsprung mit einer Höhe von max. 0,3 mm und einer Breite von max. 1,4 mm hergestellt ist, wobei 33 mm ≤ D₄ ≤ 35 mm ist.

24. Informationsträger nach einem der Ansprüche 1 bis 8,
**dadurch gekennzeichnet,**
**dass** nahe dem äußeren Rand des Substrates an der Seite S₂ ein ringförmiger Vorsprung mit einer Höhe h_{E0} und einer Breite w_{E0} vorgesehen ist, wobei 0,1 mm ≤ h_{E0} ≤ 0,5 mm und w_{E0} ≤ 1 mm sind.

25. Informationsträger nach Anspruch 24,
**dadurch gekennzeichnet,**
**dass** im Bereich einer Informationsschicht die Dicke des Substrates im wesentlichen gleichmäßig zum äußeren Rand des Informationsträgers hin abnimmt, so dass an der Seite S₁ die Substratfläche in einem Winkel α₀ zu der Informationsableseebene angeordnet ist, wobei 0,2° ≤α₀ ≤ 0,4° ist.

26. Informationsträger nach einem der Ansprüche 9 bis 18,
**dadurch gekennzeichnet,**
**dass** nahe dem äußeren Rand des Substrates an der Seite S₂ ein ringförmiger Vorsprung mit einer Höhe h_{E0} und einer Breite W_{E0} vorgesehen ist, wobei 0,1 mm ≤ h_{E0} ≤ 0,5 mm und w_{E0} ≤ 1 mm sind.

27. Informationsträger nach Anspruch 9,
**dadurch gekennzeichnet,**
**dass** oberhalb jeder der genannten Informationsschichten eine jeweilige zusätzliche Lage aus einem optisch durchsichtigen Werkstoff aufgetragen ist, deren Dicke geringer ist als die des Substrates.

28. Informationsträger nach einem der Ansprüche 1 bis 22,
**dadurch gekennzeichnet,**
**dass** 0,5 mm ≤ H₀ ≤ 0,65 mm ist.
